# FASCICULE DE BREVET EUROPEEN

(11) **EP 2 518 336 B1**
(45) Date de publication et mention de la délivrance du brevet: **22.02.2017**
(21) Numéro de dépôt: 12164929.7
(22) Date de dépôt: 20.04.2012
(51) Int. Cl.: B60R 19/24, B62D 27/06, F16B 5/00

(54) **ENSEMBLE D'ASSEMBLAGE DE DEUX PIÈCES DE VÉHICULE AUTOMOBILE**
BEFESTIGUNGSEINHEIT VON ZWEI TEILEN EINES KRAFTFAHRZEUGS
ASSEMBLY FOR JOINING TWO PARTS OF A MOTOR VEHICLE

(30) Priorité: 28.04.2011 FR 1153630
(43) Date de publication de la demande: 31.10.2012
(73) Titulaire: Automotive Exteriors Europe, 69007 Lyon (FR)
(72) Inventeur: Hervé, Jérôme, 90000 Belfort (FR)
(74) Mandataire: Remy, Vincent Noel Paul

(56) Documents cités:
- WO-A1-2012/104514
- DE-A1- 19 912 267
- FR-A1- 2 938 889
- FR-A1- 2 943 980
- US-A1- 2002 117 595

## Description

La présente invention concerne un ensemble d'assemblage de deux pièces de véhicule automobile comprenant une première pièce, une seconde pièce et un élément de verrouillage, dans lequel au moins un élément de fixation est solidaire d'une surface de l'un de la première pièce et de l'élément de verrouillage, dans lequel au moins un orifice allongé est prévu dans l'autre de la première pièce et de l'élément de verrouillage, l'élément de fixation étant adapté pour coopérer avec l'orifice allongé de sorte à former des moyens de guidage en translation le long d'un axe de la première pièce par rapport à l'élément de verrouillage.

Bien que l'invention puisse s'appliquer à toute paire de pièces fixées l'une à l'autre, elle concerne plus particulièrement la fixation d'une peau de pare-chocs sur une aile.

Pour réaliser la fixation de la peau de pare-chocs sur une aile, il est connu de prévoir des moyens de vissage ou d'encliquetage d'un rebord de la peau de pare-chocs sur un rebord de l'aile. Cependant, ces moyens sont peu pratiques car peu accessibles lors du montage du véhicule, notamment du fait de la présence d'éléments d'accostage entre l'aile et la peau de pare-chocs afin de respecter les exigences de jeux et d'affleurements entre ces deux pièces pour conférer une esthétique satisfaisante au véhicule automobile. Le démontage des pièces est également compliqué.

Le document FR 2 938 889 décrit un dispositif d'assemblage comprenant un élément de verrouillage mobile en translation par rapport à une peau de pare-choc. L'élément de verrouillage comporte des moyens de fixation qui sont introduits dans une fente prévue dans la peau de pare-choc. Les moyens de fixation forment également des moyens de guidage de l'élément de verrouillage. De ce fait, il est possible de pré-monter l'élément de verrouillage sur la peau de pare-choc.

Néanmoins, l'épaisseur de la peau de pare-choc doit être augmentée dans la zone de la fente. Typiquement, l'élément de verrouillage est réalisé par moulage par injection. La présence de la surépaisseur rend le démoulage de l'élément de verrouillage difficile, voire impossible.

Le document WO A 2012/104514 décrit un ensemble pour maintenir un pare-chocs en position de fixation sur une structure de véhicule selon le préambule de la revendication 1.

L'ensemble comporte un composant latéral comprenant un butoir et un organe de rappel élastique.

L'un des buts de l'invention est de pallier ces inconvénients en proposant un élément de verrouillage simple à fabriquer tout en simplifiant le montage et le démontage des pièces de carrosserie entre elles.

A cet effet, l'invention a pour objet l'ensemble d'assemblage précité, caractérisé en ce que le ou chaque orifice allongé comporte une zone de réception de l'élément de fixation adaptée pour recevoir l'élément de fixation dans l'orifice allongé et une zone de guidage de l'élément de fixation adaptée pour retenir l'élément de fixation mobile en translation le long de l'axe par rapport à l'autre de la première pièce et de l'élément de verrouillage, les zones de réception et de guidage étant séparées l'une de l'autre par des moyens d'encliquetage.

Selon d'autres modes de réalisation, l'invention comporte l'une ou plusieurs des caractéristiques suivantes :
- l'ensemble comprend au moins un pion solidaire de la seconde pièce et au moins une lumière ménagée dans la première pièce, l'élément de verrouillage étant mobile en translation entre une position de verrouillage, dans laquelle l'élément de verrouillage (8) maintient le pion dans ladite lumière, et une position de déverrouillage, dans laquelle l'élément de verrouillage autorise la sortie du pion de ladite lumière,
- le pion comprend un corps et une tête s'étendant à partir de la partie extrême du corps, la lumière présentant un diamètre supérieur au diamètre de la tête de sorte que le pion est adapté pour être introduit et retiré de la lumière, et l'élément de verrouillage comprend une ouverture présentant une première partie de diamètre supérieur à celui de la tête du pion, le pion étant disposé dans ladite première partie lorsque l'élément de verrouillage est en position de déverrouillage, et une deuxième partie (52) de diamètre inférieur à celui de la tête et supérieur à celui du corps du pion, le pion étant disposé dans ladite deuxième partie lorsque l'élément de verrouillage est en position de verrouillage de sorte que le pion est maintenu dans l'ouverture de l'élément de verrouillage dans la position de verrouillage,
- les moyens d'encliquetage sont adaptés pour empêcher l'élément de fixation de glisser de la zone de guidage dans la zone de réception et pour laisser glisser l'élément de fixation de la zone de réception dans la zone de guidage,
- l'élément de fixation comporte une tige dont une extrémité de fixation est raccordée à la surface et dont l'autre extrémité libre est terminée par un épaulement s'étendant sensiblement parallèlement à la surface,
- l'épaulement présente deux saillies de part et d'autre de la tige s'étendant parallèlement à la surface 21 et sensiblement perpendiculairement à l'axe, suivant un axe,
- la zone de réception présente une ouverture adaptée pour recevoir l'épaulement de l'élément de fixation,
- la zone de guidage présente une ouverture sensiblement rectangulaire présentant une zone saillante agencée au moins le long de deux bords parallèles à l'axe pour réduire la largeur de la zone de guidage en regard de ladite zone saillante,
- la zone de guidage comporte une ouverture effective présentant une largeur plus faible que celle de l'épaulement de l'élément de fixation et supérieure ou égale à celle de la tige de l'élément de fixation de sorte à guider l'élément de verrouillage entre une position de verrouillage et une position de déverrouillage le long de l'axe,
- les moyens d'encliquetage présentent deux butées s'étendant dans le plan de l'orifice allongé sensiblement perpendiculaire à l'axe et étant disposés en regard l'une de l'autre de sorte à rétrécir la section de l'orifice allongé entre la zone de réception, et la zone de guidage.

Par « solidaire », on entend solidaire en mouvement, i.e. que la pièce solidaire d'une autre pièce se déplace avec cette dernière.

L'invention a en outre pour objet un ensemble de carrosserie de véhicule automobile comprenant l'ensemble d'assemblage précité dans lequel les première et seconde pièces sont une peau de pare-chocs et une aile et dans lequel l'élément de verrouillage est fixé à la peau de pare-chocs par l'élément de fixation et de guidage.

L'invention sera mieux comprise à la lecture de la description qui suit, donnée à titre d'exemple et faite en référence aux dessins annexés, sur lesquels :
- la Figure 1 est une représentation schématique en perspective éclatée d'un ensemble d'assemblage selon l'invention,
- la Figure 2 est une représentation schématique en perspective d'un élément de fixation solidaire d'un élément de verrouillage selon l'invention,
- la Figure 3 est une représentation schématique en perspective d'un orifice allongé prévu dans une première pièce de l'ensemble d'assemblage selon l'invention,
- la Figure 4 est une représentation partielle schématique de l'ensemble d'assemblage de la Figure 1 vu de dessus, l'élément de fixation étant engagé dans une zone de réception de l'orifice allongé,
- la Figure 5 est une représentation analogue à celle de la Figure 4, l'élément de fixation étant dans une zone de guidage de l'orifice allongé, l'élément de verrouillage étant dans une position de déverrouillage, et
- la Figure 6 est une représentation schématique en perspective de l'ensemble d'assemblage de la Figure 1 vu de dessus, l'élément de verrouillage étant dans une position de verrouillage.

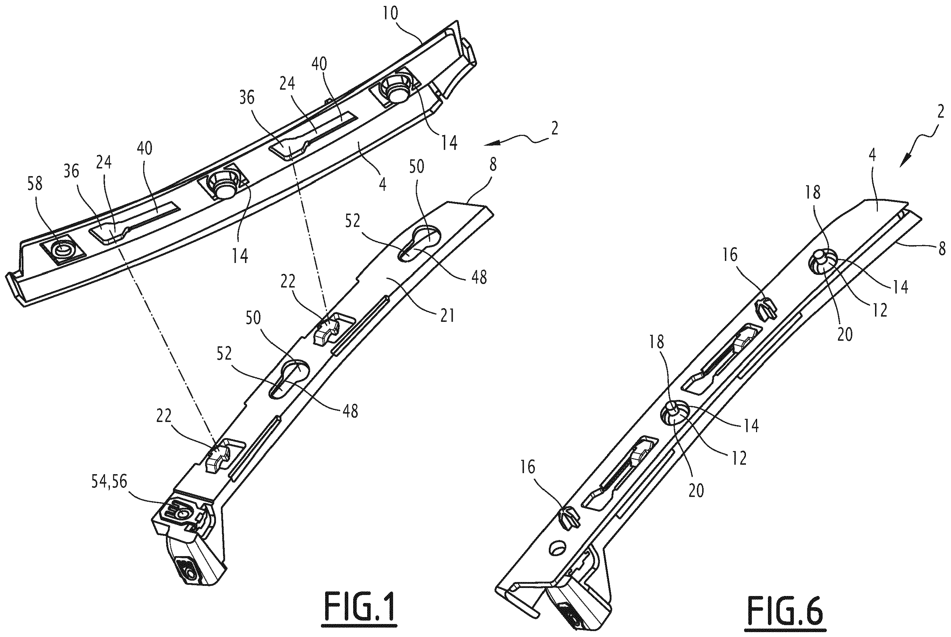

Sur la Figure 1 est représenté un ensemble d'assemblage de deux pièces de carrosserie de véhicule automobile désigné par la référence 2.

L'ensemble d'assemblage 2 comprend une première pièce 4, une seconde pièce (non représentée) et un élément de verrouillage 8. En particulier, la première pièce 4 est une peau de pare-choc et la seconde pièce est une aile. En variante, la première pièce 4 est une aile et la seconde pièce est une peau de pare-choc.

La peau de pare-choc 4 et l'aile comportent chacune un rebord 10. Le rebord 10 de la peau de pare-chocs 4 est fixé sur le rebord correspondant (non représenté) de l'aile, les rebords étant disposés l'un contre l'autre lors de l'assemblage de l'aile et de la peau de pare-chocs 4.

La peau 4 est prise en sandwich entre l'élément de verrouillage 8 et l'aile.

L'ensemble d'assemblage 2 comprend au moins un pion 12 prévu sur le rebord de l'aile et au moins une lumière 14 correspondant prévue sur le rebord 10 de la peau de pare-chocs 4. Selon le mode de réalisation représenté sur les figures, plusieurs pions 12, par exemple deux, et autant de lumières 14 sont prévus. Pour des raisons de clarté, seuls les pions 12 ont été représentés sans le rebord de l'aile. Les pions 12 font saillie du rebord de l'aile vers les lumières 14 du rebord 10 de la peau de pare-chocs 4 et sont introduits dans lesdites lumières 14 lors de l'assemblage de la peau de pare-chocs 4 et de l'aile.

Comme représenté sur la Figure 6, un pion 12 comprend un corps 18 et une tête 20 orientée vers la peau de pare-chocs 4 à partir de la partie extrême du corps 18, c'est-à-dire à l'opposé du rebord de l'aile. La tête 20 présente un diamètre supérieur à celui du corps 18. La lumière 14 présente un diamètre supérieur à celui de la tête 20. Ainsi l'introduction du pion 12 dans la lumière 14 ne pose aucun problème particulier et ne nécessite pas d'appliquer une force.

Pour faciliter le positionnement de la peau de pare-chocs 4 par rapport à l'aile, des ergots 16 de positionnement font saillie du rebord 10 de la peau de pare-chocs 4 et sont introduits dans des logements correspondants (non représentés) du rebord de l'aile.

L'élément de verrouillage 8 comprend sur une surface de verrouillage 21 un ou plusieurs éléments de fixation 22. Dans l'exemple représenté sur les figures, l'élément de verrouillage 8 comprend deux éléments de fixation 22. La peau de pare-chocs 4 comprend un ou plusieurs orifices allongés 24. De préférence, autant d'orifices allongés 24 qu'éléments de fixation sont prévus. Les éléments de fixation 22 sont adaptés pour être reçus dans les orifices allongés de sorte à prémonter l'élément de verrouillage 8 sur le rebord 10 de la peau de pare-chocs 4.

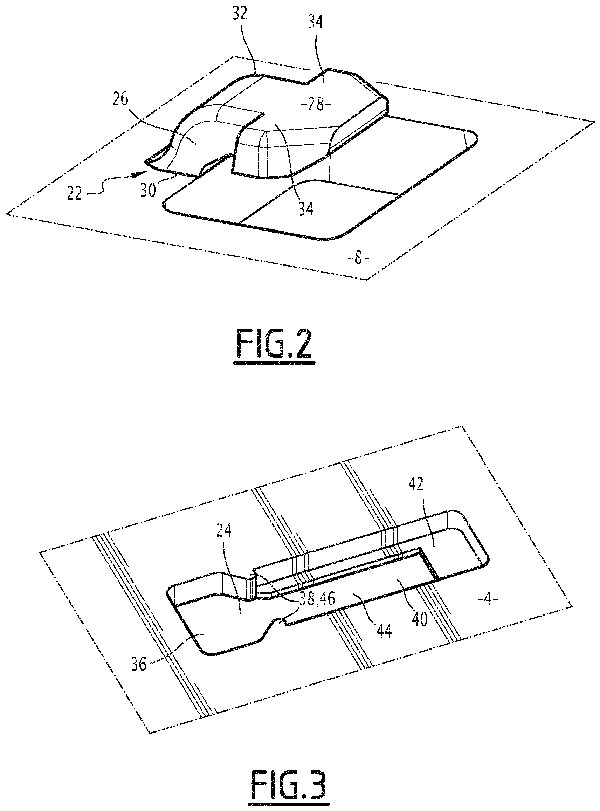

Chaque élément de fixation 22 comprend une tige 26 et un épaulement 28 (Figure 2). La tige 26 s'étend sensiblement verticalement de l'élément de verrouillage 8 en direction du rebord (10) de la peau de pare-chocs 4.

En variante, la tige 26 forme un angle différent de 90° avec la surface 21 et est orientée en projection sur la surface 21 suivant un axe A-A. La tige 26 présente donc une extrémité de fixation 30 et une extrémité libre 32. L'extrémité libre 32 est terminée par l'épaulement 28.

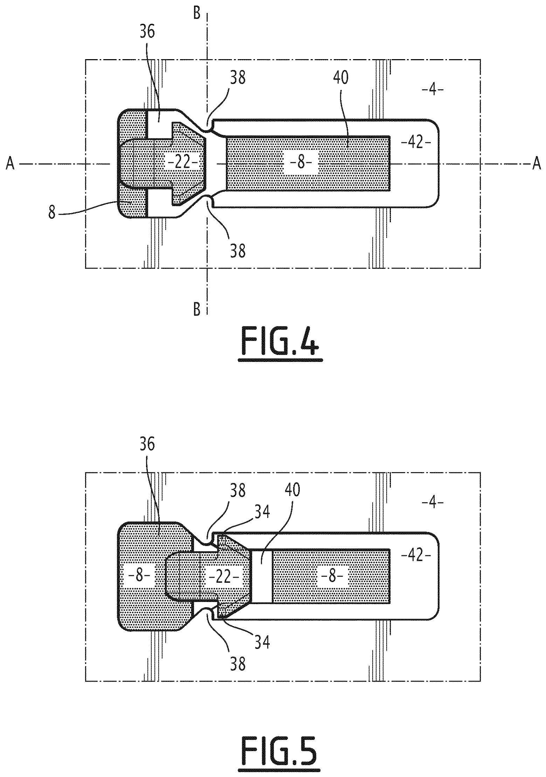

L'épaulement 28 s'étend sensiblement parallèlement à la surface 21 de l'élément de verrouillage 8. L'épaulement 28 comporte deux saillies 34 de part et d'autre de la tige 26 et s'étendant sensiblement parallèlement à la surface 21 et suivant un axe B-B perpendiculairement à l'axe A-A (Figure 4). Dans l'exemple représenté sur les figures, l'épaulement a la forme d'une flèche, la pointe avant étant tronquée et les pointes arrières étant les saillies 34. En variante, l'épaulement peut adopter d'autres formes sous réserve que l'épaulement présente toujours les deux saillies 34. La zone de l'élément de verrouillage sous l'épaulement 28 est évidée.

Chaque orifice allongé 24 comporte dans l'ordre suivant le long de l'axe A-A une zone de réception 36, des moyens d'encliquetage 38 et une zone de guidage 40 (Figure 3).

La zone de réception 36 présente une ouverture suffisamment grande pour recevoir l'épaulement 28 de l'élément de fixation 22 sans application de force (Figure 4).

Dans l'exemple représenté sur les figures, la zone de réception est sensiblement rectangulaire. Néanmoins, la zone de réception 36 peut présenter toute autre forme adaptée. La zone de guidage 40 présente une ouverture allongée sensiblement rectangulaire qui s'étend sensiblement suivant l'axe A-A. La zone de guidage 40 présente également une zone saillante ou un lamage 42, agencée au moins le long des deux bords du rectangle qui s'étendent parallèlement à l'axe A-A pour réduire la largeur de la zone de guidage 40 en regard de la zone saillante 42. Dans l'exemple représenté sur les figures, la zone saillante 42 s'étend le long des deux bords parallèles à l'axe A-A et le long du bord transversal extérieur. Au niveau de la zone saillante 42, l'épaisseur de l'élément de verrouillage est d'environ 10 mm, alors qu'elle est d'environ 25 mm en dehors de la zone saillante 42.

L'ouverture de la zone de guidage 40 est donc réduite par la zone saillante 42 à une ouverture effective 44. L'ouverture effective 44 présente une largeur (section le long de l'axe B-B) plus faible que celle de l'épaulement 28 de l'élément de fixation 22 et supérieure à celle de la tige 26 de l'élément de fixation 22. La largeur est adaptée pour guider l'élément de fixation 22 de l'élément de verrouillage 8 entre une position de verrouillage (Figure 6) et une position de déverrouillage (Figure 5) le long de l'axe A-A.

La zone de guidage 40 présente une longueur telle qu'elle permet un déplacement en translation de l'élément de verrouillage 8 par rapport à la peau de pare-chocs 4 par coulissement de l'élément de fixation 22 dans la zone de guidage 40 de l'orifice allongé 24.

Les saillies 34 de l'élément de fixation reposent sur la zone saillante 42 de la zone de guidage 40 et maintiennent donc l'élément de verrouillage 8 en contact avec la peau de pare-chocs 4.

Les moyens d'encliquetage 38 comportent deux butées 46. Les butées 46 s'étendent dans le plan de la surface 21 sensiblement parallèlement à l'axe B-B. Les butées 46 sont disposées chacune contiguë à un bord longitudinal de l'orifice allongé 24, en regard l'une de l'autre de sorte à rétrécir la section de l'orifice allongé 24 entre la zone de réception 36 et la zone de guidage 40. Les butées 46 sont suffisamment flexibles pour se déformer lorsque l'élément de fixation passe de la zone de réception 36 dans la zone de guidage 40. Les butées sont adaptées pour empêcher que l'élément de fixation glisse de la zone de guidage 40 dans la zone de réception 36.

L'élément de verrouillage 8 comprend des ouvertures 48 correspondant aux lumières 14 prévues dans la peau de pare-chocs 4. Lorsque l'élément de verrouillage 8 est fixé à la peau de pare-chocs 4, une ouverture 48 de l'élément de verrouillage se trouve en regard d'une lumière 14 de la peau de pare-chocs 4. Chaque ouverture 48 comprend une première partie 50 présentant un diamètre supérieur au diamètre de la tête 20 d'un pion 12 et une deuxième partie 52 présentant un diamètre inférieur à celui de la tête 20 et un diamètre supérieur à celui du corps 18 d'un pion 12.

En position de déverrouillage, une lumière 14 de la peau de pare-chocs 4 se trouve en regard de la première partie 50 de l'ouverture 48 correspondante ce qui permet l'introduction du pion 12 dans l'ouverture 48 par passage de la tête 20 dans la première partie 50.

Lorsque l'élément de verrouillage 8 est déplacé vers sa position de verrouillage, la deuxième partie 52 de l'ouverture 48 est déplacée en regard de la lumière 14 correspondante de la peau du pare-chocs 4. Ainsi, la tête 20 est retenue par le bord de la deuxième partie 52 de l'ouverture 8. On assure ainsi un verrouillage du pion 12 dans l'ouverture 48, c'est-à-dire que le pion 12 est maintenu dans l'ouverture 48 par l'élément de verrouillage 8, ce qui assure la fixation de la peau de pare-chocs 4 sur l'aile.

On comprend donc que, grâce à sa forme, l'élément de fixation 22 de l'élément de verrouillage 8 forme également un élément de guidage en translation de l'élément de verrouillage 8 par rapport à la peau de pare-chocs 4 entre sa position de déverrouillage et sa position de verrouillage.

Ainsi, l'élément de verrouillage 8 peut être fixé sur le rebord 10 de la peau de pare-chocs 4 avant le montage de celle-ci sur l'aile. Ensuite, l'élément de verrouillage 8 peut être simplement déplacé de sa position de déverrouillage à sa position de verrouillage lors de la fixation de la peau de pare-chocs 4 à l'aile, ce qui simplifie le montage de la peau de pare-chocs 4 et évite la gestion d'une pièce séparée sur la chaîne de montage. De même, le démontage de la peau de pare-chocs 4 de l'aile peut être effectué sans retirer l'élément de verrouillage 8 en déplaçant simplement celui-ci de sa position de verrouillage à sa position de déverrouillage.

L'ensemble d'assemblage comprend en outre des moyens de fixation 54 définitive de l'élément de verrouillage 8 à l'aile. Ces moyens 54 sont par exemple formés par un orifice de réception 56 d'un ergot (non représenté) prévu sur l'aile, ledit orifice de réception 56 étant prévu sur l'élément de verrouillage 8 en regard d'un orifice complémentaire 58 traversant le rebord 10 de la peau de pare-chocs 4. L'orifice de réception 56 est prévu pour être disposé en regard de l'orifice complémentaire 58 de la peau de pare-chocs 4 lorsque l'élément de verrouillage 8 est en position de verrouillage. L'ergot de l'aile traverse alors l'orifice complémentaire 58 de la peau de pare-chocs 4 et est fixé dans l'orifice de réception 56 de l'élément de verrouillage 8.

Les moyens de fixation définitive 54 permettent d'éviter un déverrouillage intempestif de l'élément de verrouillage 8 lorsque le montage de la peau de pare-chocs 4 est effectué.

Ensuite, le montage de la peau de pare-chocs 4 sera décrit.

Une première étape consiste à superposer le rebord 10 de la peau de pare-chocs 4 et l'élément de verrouillage 8 de telle sorte que chaque élément de fixation 22 traverse une zone de réception 36 (Figure 4).

Une deuxième étape consiste à coulisser le long de l'axe A-A l'élément de verrouillage 8 par rapport à la peau de pare-chocs 4 de sorte que chaque élément de fixation glisse dans la zone de guidage 40 et y est reçu dans la position de déverrouillage (Figure 5).

Une troisième étape consiste à superposer le rebord 10 de la peau de pare-chocs 4 prémonté sur l'élément de verrouillage 8 et un rebord de l'aile de sorte que la tête 20 du pion 12 monté sur l'aile rentre dans la lumière 14 de la peau de pare-chocs 4 et dans la première partie 50 de l'ouverture 48 prévue dans l'élément de verrouillage 8.

Une quatrième étape consiste à faire coulisser l'élément de verrouillage de la position de déverrouillage dans la position de verrouillage ce qui entraîne que le pion 12 rentre dans la deuxième partie 52 de l'ouverture 48 prévue dans l'élément de verrouillage 8 (Figure 6). La peau de pare-chocs 4 et l'aile sont ainsi assemblées.

Une cinquième étape consiste à verrouiller définitivement la peau de pare-chocs 4 sur l'aile en fixant l'ergot de l'aile (non représenté) dans l'orifice de réception 56 de l'élément de verrouillage 8.

L'assemblage de la peau de pare-chocs 4 est donc particulièrement simple et ne nécessite pas à la personne chargée du montage d'accéder à des endroits peu accessibles lors du montage. En outre, aucune action d'introduction en force ou de serrage n'est nécessaire pour assurer le maintien de la peau de pare-chocs 4 sur l'aile.

En variante, les pions 12 peuvent être prévus sur la peau de pare-chocs 4 et les lumières 14 prévues dans l'aile. De même, l'élément de verrouillage 8 peut être fixé au rebord de l'aile plutôt qu'au rebord 10 de la peau de pare-chocs 4.

Enfin, l'élément de verrouillage 8 peut comporter les orifices allongés 24 pendant que la peau de pare-chocs 4 comporte les éléments de fixation 22.

L'élément de verrouillage 8 selon l'invention ne présente pas de surépaisseurs au niveau des orifices allongés 24. De ce fait, il est plus simple de démouler l'élément de verrouillage 8 lors du procédé de fabrication par moulage par injection.

## Revendications

1. Ensemble d'assemblage (2) de deux pièces de véhicule automobile comprenant une première pièce (4), une seconde pièce et un élément de verrouillage (8), dans lequel au moins un élément de fixation (22) est solidaire d'une surface (21) de l'un de la première pièce (4) et de l'élément de verrouillage (8), dans lequel au moins un orifice allongé (24) est prévu dans l'autre de la première pièce (4) et de l'élément de verrouillage (8), l'élément de fixation (22) étant adapté pour coopérer avec l'orifice allongé (24) de sorte à former des moyens de guidage en translation le long d'un axe (A-A) de la première pièce (4) par rapport à l'élément de verrouillage (8), le ou chaque orifice allongé (24) comportant une zone de réception (36) de l'élément de fixation (22) adaptée pour recevoir l'élément de fixation (22) dans l'orifice allongé (24) et une zone de guidage (40) de l'élément de fixation (22) adaptée pour retenir l'élément de fixation (22) mobile en translation le long de l'axe (A-A) par rapport à l'autre de la première pièce (4) et de l'élément de verrouillage (8), les zones de réception et de guidage (36, 40) étant séparées l'une de l'autre par des moyens d'encliquetage (38), la première pièce (4) étant prise en sandwich entre l'élément de verrouillage (8) et la seconde pièce, l'élément de fixation (22) étant adapté pour être reçu dans l'orifice allongé (24) de sorte à pré-monter l'élément de verrouillage (8) sur la première pièce (4),
**caractérisé en ce que** l'orifice allongé (24) comporte dans l'ordre suivant le long de l'axe (A-A) la zone de réception (36), les moyens d'encliquetage (38) et la zone de guidage (40).

2. Ensemble (2) selon la revendication 1, dans lequel la première pièce (4) est l'un d'une peau de pare-chocs et d'une aile, et la seconde pièce est l'autre d'une peau de pare-chocs et d'une aile.

3. Ensemble (2) selon la revendication 1 ou 2, comprenant au moins un pion (12) solidaire de la seconde pièce et au moins une lumière (14) ménagée dans la première pièce (4), l'élément de verrouillage (8) étant mobile en translation entre une position de verrouillage, dans laquelle l'élément de verrouillage (8) maintient le pion (12) dans ladite lumière (14), et une position de déverrouillage, dans laquelle l'élément de verrouillage (8) autorise la sortie du pion (12) de ladite lumière (14).

4. Ensemble (2) selon la revendication 3, dans lequel :
- le pion (12) comprend un corps (18) et une tête (20) s'étendant à partir de la partie extrême du corps (18), la lumière (14) présentant un diamètre supérieur au diamètre de la tête (20) de sorte que le pion (12) est adapté pour être introduit et retiré de la lumière (14), et
- l'élément de verrouillage (8) comprend une ouverture (48) présentant une première partie (50) de diamètre supérieur à celui de la tête (20) du pion (18), le pion (18) étant disposé dans ladite première partie (50) lorsque l'élément de verrouillage (8) est en position de déverrouillage, et une deuxième partie (52) de diamètre inférieur à celui de la tête (20) et supérieur à celui du corps (18) du pion (12), le pion (12) étant disposé dans ladite deuxième partie (52) lorsque l'élément de verrouillage (8) est en position de verrouillage de sorte que le pion (12) est maintenu dans l'ouverture (48) de l'élément de verrouillage (8) dans la position de verrouillage.

5. Ensemble (2) selon l'une quelconque des revendications 1 à 4, dans lequel les moyens d'encliquetage (38) sont adaptés pour empêcher l'élément de fixation (22) de glisser de la zone de guidage (40) dans la zone de réception (36) et pour laisser glisser l'élément de fixation (22) de la zone de réception (36) dans la zone de guidage (40).

6. Ensemble (2) selon l'une quelconque des revendications 1 à 5, dans lequel l'élément de fixation (22) comporte une tige (26) dont une extrémité de fixation (30) est raccordée à la surface (21) et dont l'autre extrémité libre (32) est terminée par un épaulement (28) s'étendant sensiblement parallèlement à la surface (21).

7. Ensemble (2) selon la revendication 6, dans lequel l'épaulement (28) présente deux saillies (34) de part et d'autre de la tige (26) s'étendant parallèlement à la surface (21) et sensiblement perpendiculairement à l'axe (A-A), suivant un axe (B-B).

8. Ensemble (2) selon la revendication 6 ou 7, dans lequel la zone de réception (36) présente une ouverture adaptée pour recevoir l'épaulement (28) de l'élément de fixation (22).

9. Ensemble (2) selon l'une quelconque des revendications 1 à 8, dans lequel la zone de guidage (40) présente une ouverture sensiblement rectangulaire présentant une zone saillante (42) agencée au moins le long de deux bords parallèles à l'axe (A-A) pour réduire la largeur de la zone de guidage (40) en regard de ladite zone saillante (42).

10. Ensemble (2) selon l'une quelconque des revendications 5 à 8, dans lequel la zone de guidage (40) comporte une ouverture effective (44) présentant une largeur plus faible que celle de l'épaulement (28) de l'élément de fixation (22) et supérieure ou égale à celle de la tige (26) de l'élément de fixation (22) de sorte à guider l'élément de verrouillage (8) entre une position de verrouillage et une position de déverrouillage le long de l'axe (A-A).

11. Ensemble (2) selon l'une quelconque des revendications 1 à 10, dans lequel les moyens d'encliquetage (38) présentent deux butées (46) s'étendant dans le plan de l'orifice allongé (24) sensiblement perpendiculaire à l'axe (A-A) et étant disposés en regard l'une de l'autre de sorte à rétrécir la section de l'orifice allongé (24) entre la zone de réception (36) et la zone de guidage (40).

12. Ensemble de carrosserie de véhicule automobile comprenant un ensemble d'assemblage (2) selon l'une quelconque des revendications précédentes, dans lequel les première (4) et seconde pièces sont une peau de pare-chocs et une aile, et dans lequel l'élément de verrouillage (8) est fixé à la peau de pare-chocs (4) par l'élément de fixation et de guidage (22).

## Patentansprüche

1. Befestigungseinheit (2) von zwei Teilen eines Kraftfahrzeugs bestehend aus einem ersten Bauteil (4), einem zweiten Bauteil und einem Einrastelement (8), in der mindestens ein Befestigungselement (22) mit einer Fläche (21) mit einem des ersten Bauteils (4) und dem Einrastelement (8) verbunden ist, in der mindestens eine längliche Öffnung (24) in dem anderen des ersten Bauteils (4) und des Einrastelements (8) angebracht ist, wobei das Befestigungselement (22) so ausgelegt ist, dass es zusammen mit der länglichen Öffnung (24) Führungsvorrichtungen für eine Querverschiebung entlang einer Achse (A-A) des ersten Bauteils (4) gegenüber dem Einrastelement (8) bildet, bei der die oder jede längliche Öffnung (24) einen Aufnahmebereich (36) des Befestigungselements (22) zur Aufnahme des Befestigungselements (22) in der länglichen Öffnung (24) und einen Führungsbereich (40) für das Befestigungselement (22) aufweist, dergestalt, dass das Befestigungselement (22) quer entlang der Achse (A-A) gegenüber dem anderen des ersten Bauteils (4) und dem Einrastelement (8) verschoben werden kann, wobei die Aufnahmebereiche und Führungsbereiche (36, 40) durch Rastvorrichtungen (38) getrennt sind, wobei das erste Bauteil (4) zwischen dem Einrastelement (8) und dem zweiten Bauteil sandwichartig angeordnet ist, wobei das Befestigungselement (22) so gestaltet ist, dass es in der länglichen Öffnung (24) so aufgenommen wird, dass das Einrastelement (8) auf dem ersten Bauteil (4) vormontiert wird,
**dadurch gekennzeichnet, dass** die längliche Öffnung (24) entlang der Achse (A-A) hintereinander den Aufnahmebereich (36), die Rastvorrichtungen (38) und den Führungsbereich (40) umfasst.

2. Einheit (2) nach Anspruch 1, in der das erste Bauteil (4) entweder eine Stoßfängerhaut oder ein Kotflügel ist und das zweite Bauteil jeweils das andere, entweder eine Stoßfängerhaut oder ein Kotflügel, ist.

3. Einheit (2) nach Anspruch 1 oder 2, die mindestens einen mit dem zweiten Bauteil fest verbundenen Zapfen (12) und mindestens einen in das erste Bauteil (4) eingebrachten Schlitz (14) umfasst, wobei das Einrastelement (8) zwischen einer Verriegelungsstellung, in der das Einrastelement (8) den Zapfen (12) in dem Schlitz (14) festhält, und einer Entriegelungsstellung, in der das Einrastelement (8) den Rückzug des Zapfens (12) aus dem Schlitz (14) zulässt, quer verschiebbar ist.

4. Einheit (2) nach Anspruch 3, in der:
- der Zapfen (12) einen Schaft (18) und einen Kopf (20) am Ende des Schafts (18) umfasst, wobei der Schlitz (14) einen größeren Durchmesser als der Kopf (20) aufweist, dergestalt dass der Zapfen (12) in den Schlitz (14) eingefügt und aus ihm herausgezogen werden kann, und
- das Einrastelement (8) eine Öffnung (48) mit einem vorderen Teil (50) aufweist, deren Durchmesser größer ist als der des Kopfes (20) des Zapfens (18), wobei sich der Zapfen (18) in der Entriegelungsstellung des Einrastelements (8) im vorderen Teil (50) befindet, und einen hinteren Teil (52) aufweist, dessen Durchmesser kleiner ist als der des Kopfes (20) und größer als der des Schafts (18) des Zapfens (12), wobei sich der Zapfen (12) in der Verriegelungsstellung des Einrastelements (8) im hinteren Teil (52) befindet, sodass der Zapfen (12) in der Öffnung (48) des Einrastelements (8) in Verriegelungsstellung gehalten wird.

5. Einheit (2) nach einem der Ansprüche 1 bis 4, in der die Rastvorrichtungen (38) so gestaltet sind, dass das Befestigungselement (22) nicht aus dem Führungsbereich (40) in den Aufnahmebereich (36) rutschen kann und das Befestigungselement (22) vom Aufnahmebereich (36) in den Führungsbereich (40) rutschen kann.

6. Einheit (2) nach einem der Ansprüche 1 bis 5, in der das Befestigungselement (22) einen Steg (26) umfasst, dessen Befestigungsende (30) mit der Fläche (21) fest verbunden ist und dessen freies Ende (32) in eine Schulter (28) mündet, die sich parallel zur Fläche (21) wesentlich erweitert.

7. Einheit (2) nach Anspruch 6, in der die Schulter (28) zu beiden Seiten des Stegs (26) parallel zur Fläche (21) und im wesentlichen senkrecht zur Achse (A-A) entlang einer Achse (B-B) zwei Vorsprünge (34) aufweist.

8. Einheit (2) nach Anspruch 6 oder 7, in der der Aufnahmebereich (36) eine Öffnung zur Aufnahme der Schulter (28) des Befestigungselements (22) aufweist.

9. Einheit (2) nach einem der Ansprüche 1 bis 8, in der der Führungsbereich (40) eine im Wesentlichen rechteckige Öffnung mit einem Vorsprung (42) aufweist, der sich mindestens entlang der beiden Seiten parallel zur Achse (A-A) fortsetzt, um die Breite des Führungsbereichs (40) neben dem Vorsprung (42) zu reduzieren.

10. Einheit (2) nach einem der Ansprüche 5 bis 8, in der der Führungsbereich (40) eine effektive Öffnung (44) aufweist, die schmaler ist als die Schulter (28) des Befestigungselements (22) und breiter oder ebenso breit ist wie der Steg (26) des Befestigungselements (22), sodass das Einrastelement (8) zwischen der Verriegelungs- und Entriegelungsstellung entlang der Achse (A-A) geführt wird.

11. Einheit (2) nach einem der Ansprüche 1 bis 10, in der die Rastvorrichtungen (38) zwei Anschläge (46) aufweisen, die sich in der Ebene der länglichen Öffnung (24) im Wesentlichen senkrecht zur Achse (A-A) erstrecken und einander gegenüberliegend angeordnet sind, sodass der Querschnitt der länglichen Öffnung (24) zwischen dem Aufnahmebereich (36) und dem Führungsbereich (40) verengt wird.

12. Kraftfahrzeugkarosserieeinheit mit einer Befestigungseinheit (2) nach einem der vorstehenden Ansprüche, in der die ersten (4) und zweiten Bauteile eine Stoßfängerhaut und ein Kotflügel sind und in der das Einrastelement (8) mit einem Befestigungs- und Führungselement (22) an der Stoßfängerhaut (4) befestigt ist.

## Claims

1. Assembly (2) for joining two parts of a motor vehicle comprising a first part (4), a second part and a locking element (8), wherein at least one fastening element (22) is secured to a surface (21) of one of the first part (4) and of the locking element (8), wherein at least one elongated orifice (24) is provided in the other of the first part (4) and of the locking element (8), the fastening element (22) being adapted to cooperate with the elongated orifice (24) so as to form guiding means in translation along an axis (A-A) of the first part (4) relative to the locking element (8), the or each elongated orifice (24) having an area (36) for receiving the fastening element (22) adapted to receive the fastening element (22) in the elongated orifice (24) and an area (40) for guiding the fastening element (22) adapted to retain the fastening element (22) movable in translation along the axis (A-A) relative to the other of the first part (4) and of the locking element (8), the receiving and guiding areas (36, 40) being separated from each other by latching means (38), the first part (4) being sandwiched between the locking element (8) and the second part, the fastening element (22), being adapted to be received in the elongated orifice (24) so as to pre-assemble the locking element (8) on the first part (4),
**characterised in that** the elongated orifice (24) comprises, in the following order, along the axis (A-A) the receiving area (36), the latching means (38) and the guiding area (40).

2. Assembly (2) according to claim 1, wherein the first part (4) is one of a bumper skin or a wing, and the second part is the other of a bumper skin or a wing.

3. Assembly (2) according to claim 1 or 2, comprising at least one pin (12) integral with the second part and at least one hole (14) formed in the first part (4), the locking element (8) being movable in translation between a locking position, in which the locking element (8) holds the pin (12) in said hole (14), and an unlocking position, in which the locking element (8) allows the pin (12) to come out of said hole (14).

4. Assembly (2) according to claim 3, wherein:
- the pin (12) comprises a body (18) and a head (20) extending from the end portion of the body (18), the diameter of the hole (14) being greater than that of the head (20) such that the pin (12) is adapted to be inserted and withdrawn from the hole (14), and
- the locking element (8) comprises an opening (48) having a first portion (50) of diameter greater than that of the head (20) of the pin (18), the pin (18) being arranged in said first portion (50) when the locking element (8) is in the unlocking position, and a second portion (52) of diameter less than that of the head (20) and greater than that of the body (18) of the pin (12), the pin (12) being arranged in said second portion (52) when the locking element (8) is in the locking position such that the pin (12) is held in the opening (48) of the locking element (8) in the locking position.

5. Assembly (2) according to any one of claims 1 to 4, wherein the latching means (38) are adapted to prevent the fastening element (22) from sliding from the guiding area (40) into the receiving area (36) and to allow the fastening element (22) to slide from the receiving area (36) into the guiding area (40).

6. Assembly (2) according to any one of claims 1 to 5, wherein the fastening element (22) comprises a rod (26) whose fastening end (30) is connected to the surface (21) and whose other free end (32) is terminated by a shoulder (28) extending substantially parallel to the surface (21).

7. Assembly (2) according to claim 6, wherein the shoulder (28) has two projections (34) on either side of the rod (26) extending parallel to the surface (21) and substantially perpendicular to the axis (A-A), along an axis (B-B).

8. Assembly (2) according to claim 6 or 7, wherein the receiving area (36) has an opening adapted to receive the shoulder (28) of the fastening element (22).

9. Assembly (2) according to any one of claims 1 to 8, wherein the guiding area (40) has a substantially rectangular opening having a protruding area (42) arranged at least along two edges parallel to the axis (A-A) to reduce the width of the guiding area (40) opposite said protruding area (42).

10. Assembly (2) according to any one of claims 5 to 8, wherein the guiding area (40) comprises an effective opening (44) of width less than that of the shoulder (28) of the fastening element (22) and greater than or equal to that of the rod (26) of the fastening element (22) so as to guide the locking element (8) between a locking position and an unlocking position along the axis (A-A).

11. Assembly (2) according to any one of claims 1 to 10, wherein the latching means (38) have two stops (46) extending in the plane of the elongated orifice (24) substantially perpendicular to the axis (A-A) and being arranged opposite each other so as to reduce the cross-section of the elongated orifice (24) between the receiving area (36) and the guiding area (40).

12. Motor vehicle bodywork assembly comprising a joining assembly (2) according to any one of the preceding claims, wherein the first (4) and second parts are a bumper skin and a wing, and wherein the locking element (8) is fastened to the bumper skin (4) by the fastening and guiding element (22).
